# EUROPEAN PATENT APPLICATION

(11) **EP 4 198 409 A1**
(43) Date of publication of application: **21.06.2023**
(21) Application number: 21216153.3
(22) Date of filing: 20.12.2021
(51) Int. Cl.: F24H 1/00, F24H 1/12, F24H 9/00, F24H 9/1818, F24H 9/20, B60H 1/22, H05B 3/00

(54) **A HEATING DEVICE FOR ELECTRICALLY HEATING A HEAT TRANSFER FLUID**

(71) Applicant: Valeo Autoklimatizace k.s., P.O. Box 90 26990 Rakovnik (CZ)
(72) Inventor: KOZICKA, Jan, 108 00 Prague (CZ)
(74) Representative: Valeo Systèmes Thermiques

(57) **Abstract**

A heating device (100) for electrically heating a heat transfer fluid, comprising a housing (110) delimiting an internal volume (114) which comprises at least one chamber (150) delimited by an outer wall (159) for circulation of a heat transfer fluid, the circulation chamber (150) having at least a first internal space (151) and at least a second internal space (152) separated from each other, at least partly, by a partition (153) with a passage (156) formed so as to allow circulation of the heat transfer fluid there between, an inlet hydraulic connection member (103) connected to the first internal space (151) and an outlet hydraulic connection member (104) connected to the second internal space (152), at least one first electrical heating element (154) received in the first internal space (151) of the chamber (150) and at least one second electrical heating element (155) received in the second internal space (152), the heating device (100) being configured for mounting and operation in a horizontal position in which the first internal space (151) and the second internal space (152) are arranged substantially on the same level with respect to the ground, wherein that the outlet hydraulic connection member (104) is arranged at the substantially top portion of the second internal space (152) when the heating device (100) is in the horizontal position.

## Description

### FIELD OF THE INVENTION

The field of the present invention is that of electric heating and heat transfer liquid circulation devices, in particular for a ventilation, heating and/or air conditioning installation of a motor vehicle passenger compartment. More particularly, the invention relates to electric heating devices used for such installations in motor vehicles, electric or hybrid.

The heating of the air for the thermal treatment of the passenger compartment of a motor vehicle with an internal combustion engine is ensured by an exchange of heat between a flow of air and a heat transfer liquid, through a heat exchanger. In the case of hybrid or electric vehicles, electric heating devices are known which form a heat source and in which an electric current is circulated to raise the temperature of an electric heating element onboard this heating device. The liquid to be heated passes through the heating device and is brought into contact with the electric heating element, and a heat exchange takes place between the electric heating element and the liquid intended for heating the passenger compartment, which then heats up in turn.

The electrical heating element usually consists of one or more heating resistors arranged in a circulation chamber for the liquid to be heated. This circulation chamber is itself received in a housing. More particularly, this housing defines an internal volume in which the circulation chamber is received and in which is also received at least one printed circuit board which allows to ensure the electrical connection of the electrical heating element with a power source external to the heating device.

The circulation chamber may have one or more internal spaces in which the electrical heating elements are placed. In general, although the heating elements occupy a substantial amount of the dedicated volume of the circulation chamber, they do not fill it completely. For example, there is a space between the inner walls and the heating elements. There may also be a space between the consecutive windings of the electrical heating elements. These spaces allow the heat transfer fluid to travel through and between the internal spaces and to be efficiently heated.

Because the electrical heating elements do not fill the dedicated space completely, it may happen that in certain orientations of the heater some gas, e.g. an air bubble, may become trapped within the internal space. When the electrical heating element is exposed to such air bubble, for example when a part of the electrical heating element remains elevated with respect to the heat transfer fluid and is not in contact with it during operation of the heating device, this part may burn and consequently become damaged.

It would be desirable to provide a device for electrically heating a heat transfer fluid which would allow to prevent burning of the electrical heating element in trapped air bubbles, in particular when adapted to be mounted in one or more orientations with respect to the ground.

An object of the present invention thus relates to a heating device for electrically heating a heat transfer fluid, comprising a housing delimiting an internal volume which comprises at least one chamber delimited by an outer wall for circulation of a heat transfer fluid, the circulation chamber having at least a first internal space and at least a second internal space separated from each other, at least partly, by a partition with a passage formed so as to allow circulation of the heat transfer fluid there between, an inlet hydraulic connection member connected to the first internal space and an outlet hydraulic connection member connected to the second internal space, at least one first electrical heating element received in the first internal space of the chamber and at least one second electrical heating element received in the second internal space, the heating device being configured for mounting and operation in a horizontal position in which the first internal space and the second internal space are arranged substantially on the same level with respect to the ground, wherein the outlet hydraulic connection member is arranged at the substantially top portion of the second internal space when the heating device is in the horizontal position.

Preferably, the passage is arranged at the substantially top portion of the first internal space and the second internal space when the heating device is in the horizontal position.

Preferably, the heating device is configured for mounting and operation in a vertical position in which the second internal space is arranged substantially above the first internal space with respect to the ground, wherein the outlet hydraulic connection member is arranged at the substantially top portion of the second internal space when the heating device is in the vertical position.

Preferably, the first internal space and the second internal space have substantially the same size and shape, the shape being of a tube with a progressively decreasing diameter.

Preferably, the first and the second electrical heating elements extend along their main extension axes X and comprise intermediate portions with windings wound around said main extension axes X.

Preferably, the first internal space and the second internal space decrease their diameter along the main extension axes X of the first electrical heating element and the second electrical heating element respectively.

Preferably, the outlet hydraulic connection member merges into the outer wall and the second internal space substantially parallel to the main extension axis X of the second electrical heating element.

Preferably, the inlet hydraulic connection member merges into the outer wall and the first internal space substantially parallel to the main extension axis X of the first electrical heating element.

Preferably, the inlet hydraulic connection member is located lower than the outlet hydraulic connection member when the heating device is in the horizontal position.

Preferably, the outlet hydraulic connection member is located within a top quarter of the second internal space, the top quarter being the one on the opposite portion of the second internal space in relation to the first internal space when the heating device is in the horizontal position.

Preferably, the windings are arranged along the outer wall at a distance which is decreasing along the main extension axes X.

Preferably, the windings are arranged along the outer wall at a constant distance.

Preferably, the inlet hydraulic connection member and the outlet hydraulic connection member extend in parallel.

The present invention also relates to a heating, ventilation and/or air-conditioning system, comprising at least one heating device as mentioned above.

Other features, details and advantages will become clearer upon reading the detailed description given below, by way of indication, in connection with the various views of the invention illustrated in the following figures:
Fig. 1 is a perspective view of an electric heater according to the invention;
Fig. 2 is a cross-sectional view of the electric heating device according to the invention as indicated in Fig. 1;
Fig. 3 is another perspective view of the electric heating device according to one embodiment;
Fig. 4 is a cross-sectional view of the electric heating device according to the invention as indicated in Fig. 3;
Fig. 5 is another perspective view of the electric heating device according to another embodiment;
Fig. 6 is a cross-sectional view of the electric heating device according to the invention as indicated in Fig. 5;
Fig. 7 presents the inside portion of the circulation chamber.

The features, variants and different embodiments of the invention may be combined with each other in various combinations, provided that they are not incompatible or exclusive of each other. In particular, it will be possible to imagine variants of the invention comprising only a selection of features described hereinafter in isolation from the other features described, if this selection of features is sufficient to confer a technical advantage or to differentiate the invention from the prior art.

In the figures, the designations longitudinal, transverse, lateral, left, right, top, bottom refer to the orientation, in a trihedron L, V, T of a housing 110 of an electric heating device 100 according to the invention. In this reference frame, a longitudinal axis L represents a longitudinal direction, a transverse axis T represents a transverse direction, and a vertical axis V represents a vertical direction of the considered object. In this reference frame, a vertical section corresponds to a section made along a transverse and vertical plane, i.e. a plane in which the transverse axis T and the vertical axis V of the trihedron are inscribed. A longitudinal section is a section made in a longitudinal and vertical plane, i.e. a plane in which the longitudinal axis L and the vertical axis V are inscribed. Finally, a transverse section is a section made in a transverse and longitudinal plane, i.e. a plane in which the transverse axis T and the longitudinal axis L are inscribed.

In the following description, the terms "electric heating device" and "heating device" will be used without distinction.

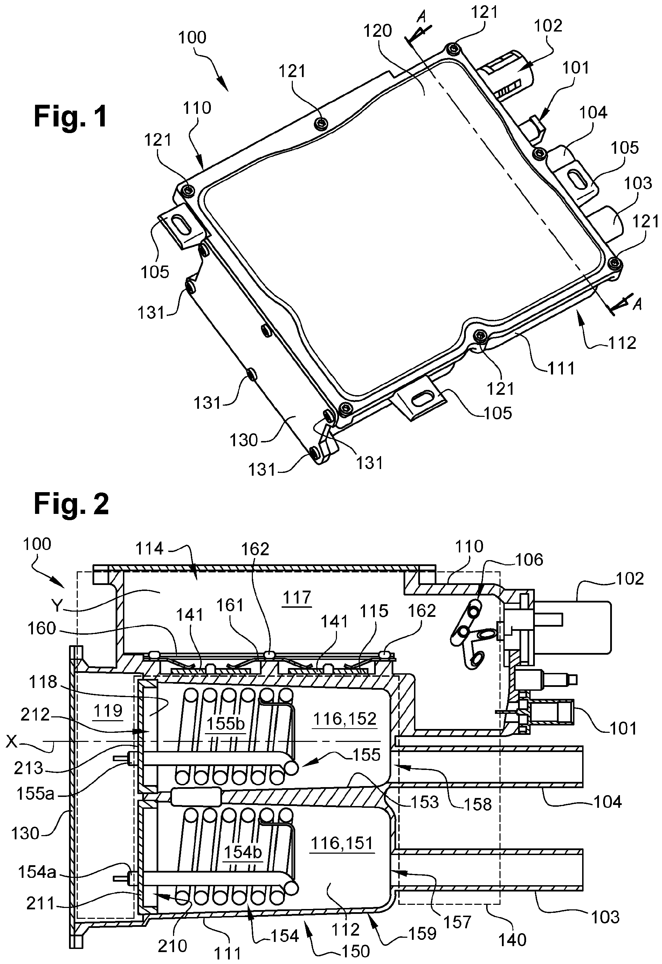

Fig. 1 illustrates, in perspective, a heating device 100 according to the present invention. This heating device 100 comprises at least one housing 110 formed of at least one peripheral wall 111 which has at least one opening closed by a cover 130, a bottom wall 112, a top wall which has an opening covered by a cover 120. The housing 110, and more particularly the walls of this housing 110, delimit an internal volume - for example visible in Fig. 2 - which receives at least one chamber for circulation of a heat transfer liquid and at least one printed circuit board.

The housing 110 has at least one front face formed, at least, by a first portion of the peripheral wall 111 and by the cover 130, a rear face formed, at least, by a second portion of the peripheral wall 111, an upper face formed, at least, by the cover 120, a lower face formed, at least, by the bottom wall 112 and at least two lateral faces, which connect, respectively, the upper face, the lower face, the front face and the rear face of the housing. More particularly, a first side face is formed by a third portion of the peripheral wall 111 that extends in a first longitudinal plane and a second side face is formed by a fourth portion of the peripheral wall that extends in a second longitudinal plane that is distinct and parallel to the first longitudinal plane.

In order to allow the connection of the printed circuit board to an external power source, at least one control connector 101 and at least one power connector 102 are arranged so as to project from the rear face of the housing 110, i.e., from the second portion of the peripheral wall 111 forming this rear face. An inlet hydraulic connection member 103 and an outlet hydraulic connection member 104 are also formed on the rear face of the housing 110 and are respectively configured to allow the routing and discharge of heat transfer fluid into and out of the circulation chamber. More particularly, the inlet connection member 103 is connected on the one hand to a heat transfer liquid circuit and on the other hand to an inlet mouth formed in a wall of the circulation chamber, and the outlet hydraulic connection member 104, for its part, is connected on the one hand to an outlet mouth formed in a wall of the circulation chamber and on the other hand to the heat transfer liquid circuit. In other words, it is understood that the heating device 100 according to the invention is adapted to be arranged on a heat transfer liquid circuit.

According to the example illustrated in the figures, the inlet hydraulic connection member 103 and the outlet hydraulic connection member 104 take the form of tubing, i.e., hollow cylindrical structures.

In this example, the inlet hydraulic connection member 103 and the outlet hydraulic connection member 104 extend in parallel.

The cover 120 is held on the upper wall by at least one fastening element 121, advantageously by a plurality of fastening elements 121. In order to ensure that the cover 120 is held permanently on the upper wall, a distance of less than or equal to 70 mm is maintained between two successive fixing elements 121. This distance is measured, between two successive fastening elements 121, parallel to a straight line that lies in a main extension plane of the cover 120, i.e. a transverse plane. As for the cover 130, it is held on the peripheral wall 111 by at least one fastening member 131, advantageously by a plurality of fastening members 131. In order to ensure that the cover 130 is held permanently on the peripheral wall 111, a distance of less than or equal to 70 mm is maintained between two successive fastening members 131, this distance being measured along a straight line that lies in a main extension plane of the cover 130, i.e. a vertical plane.

The housing 110 also includes at least one mounting tab 105 adapted to allow the electric heating device 100 to be fixed, for example, in a vehicle. According to the illustrated example, the housing 110 more particularly comprises three mounting tabs 105 distributed on the peripheral wall 111. A first mounting tab 105 is thus formed on the first portion of the peripheral wall 111 which participates in forming the front face of the housing 110, a second mounting tab 105 is formed on the third portion of the peripheral wall 111 which forms the first lateral face of the housing 110, and a third mounting tab 105, for its part, is formed on the rear face of the housing 110, i.e., on the second portion of the peripheral wall 111 which forms this rear face.

With reference to Fig. 2, we will now describe more fully an example of the internal arrangement of the housing 110 of the heating device 100 according to the invention. This Fig. 2 thus illustrates the heating device 100 seen according to a cross-section made along a plane AA illustrated in Fig. 1.

As previously mentioned, the housing 110 defines an internal volume 114 in which at least the circulation chamber 150 and the printed circuit board 140 - schematically illustrated in Fig. 2 - are received. An internal wall 115 separates this internal volume 114 into at least a first compartment 116 and at least a second compartment 117. A partition wall 118 is also arranged in the internal volume 114 so as to define a third compartment 119. The partition wall 118 has at least one opening 210 that communicates the circulation chamber 150 and the third compartment 119. As detailed below, this at least one opening 210 is obstructed by at least one closure plate 211.

The first compartment 116 is thus delimited, at least, by a first portion of the peripheral wall 111, by a first portion of the bottom wall 112, by the inner wall 115, by the partition wall 118 and by a first portion of the lid. The second compartment 117 is delimited, at least, by a second portion of the peripheral wall 111, by a second portion of the bottom wall 112, by the internal wall 115 and by at least a second portion of the lid 120. As for the third compartment 119, it is delimited by the partition wall 118, by a third portion of the peripheral wall 111, by a third portion of the lid and by the cover 130. The first, second and third parts of the above-mentioned elements are distinct from each other.

The circulation chamber 150 is received within the first compartment 116. More particularly, according to the example illustrated here, this circulation chamber 150 is delimited by an outer wall 159 formed by at least the first portion of the bottom wall 112 of the housing 110, the inner wall 115, the partition wall 118, the first portion of the peripheral wall 111 and a top wall - not visible in this cross-section.

It is understood that the first portion of the cover that participates in delimiting the first compartment 116 is arranged opposite the upper wall of the circulation chamber 150.

According to the example illustrated here, the circulation chamber 150 has at least a first internal space 151 and at least a second internal space 152 separated from each other, at least partially, by a partition 153. As shown, at least one first electrical heating element 154 is received in the first internal space 151 and at least one second electrical heating element 155 is received in the second internal space 152 of this circulation chamber 150. According to the illustrated example, the partition wall 118 which participates in delimiting the circulation chamber 150 has a first opening 210 and a second opening 212 which open, respectively, on the first internal space 151 and on the second internal space 152. These openings 210, 212 are respectively closed by a first closure plate 211 and by a second closure plate 213.

According to the illustrated example the first and second electrical heating elements 154, 155 are respectively formed of an electrical heating resistor, for example a shielded resistor. A passage 156 is formed in the partition 153 so as to allow the circulation of heat transfer liquid throughout the circulation chamber 150, i.e., both in the first internal space 151 and in the second internal space 152. For example, this passage 156 may take the form of a rectangular, or substantially rectangular, cutout formed in the partition 153.

The first electrical heating element 154 includes at least one first terminal segment 154a, at least one second terminal segment - not visible in the cross-section of Fig. 2 - and an intermediate portion 154b that connects the first terminal segment 154a to the second terminal segment. The first terminal segment 154a and the second terminal segment are adapted to allow electrical power to be supplied to the first electrical heating element 154, and thus allow the first electrical heating element 154 to heat. As for the intermediate portion 154b, it is at least partially wrapped around a main extension axis X. The first terminal segment 154a and the second terminal segment extend, respectively, in a direction parallel to the main extension axis X. Advantageously, the first terminal segment 154a and the second terminal segment extend on a same side of the first electrical heating element 154.

The winding of the intermediate portion 154b may, for example, be a helical winding, i.e., a winding according to a regular motion combining translation and rotation about the main extension axis X.

In other words, the first and the second electrical heating elements 154, 155 extend along their main extension axes X and comprise intermediate portions 154b, 155b with windings wound around said main extension axes X.

According to the example illustrated here, the first electrical heating element 154 and the second electrical heating element 155 have identical structures so that the description just given of the first electrical heating element 154 applies mutatis mutandis to the second electrical heating element 155.

In this example, the first internal space 151 and the second internal space 152 decrease their diameter along the main extension axes X of the first electrical heating element 154 and the second electrical heating element 154 respectively.

In one option, the windings are arranged along the outer wall 159 at a distance which is decreasing along the main extension axes X. In other words, the electrical heating elements 154, 155 may maintain their dimensioning along their main extension axes X while the internal spaced 151, 152 decrease in size along the same axes.

Alternatively, the windings are arranged along the outer wall 159 at a constant distance.

The heat-transfer liquid inlet mouth 157 and the outlet mouth 158 of this heat-transfer liquid are both formed in the first portion of the peripheral wall 111 which participates in delimiting the first compartment 116. As shown, the inlet opening 157 to which the inlet hydraulic connection member 103 is hydraulically connected is made so as to open into the first internal space 151 of the circulation chamber 150 and the outlet opening 158 of the heat transfer liquid to which the outlet hydraulic connection member 104 is hydraulically connected is made so as to open into the second internal space 152 of this circulation chamber 150. Advantageously, the fact that these inlet 157 and outlet 158 are made so that they open, respectively, into the first internal space 151 and into the second internal space 152 makes it possible to ensure that the heat-transfer liquid circulates in these two internal spaces 151, 152 before leaving the circulation chamber 150, thus improving the efficiency of the heating device 100 according to the invention. In other words, such an arrangement allows the heat transfer liquid to be in contact with the two electrical heating elements 154, 155 over a minimum duration that ensures that the heat transfer liquid leaves the circulation chamber 150 at a predetermined minimum temperature.

Advantageously, the bottom wall 112, the inner wall 115, the partition wall 118, the top wall, the first portion of the peripheral wall 111, and the partition 153 may be made of one material, i.e., form a single assembly that cannot be separated without causing deterioration of the bottom wall 112, the inner wall 115, the partition wall 118, the peripheral wall 111, the top wall and/or the partition 153.

As discussed above, the internal volume 114 of the housing 110 also houses the printed circuit board 140 schematically illustrated in dashed lines in Fig. 2. This printed circuit board 140 is electrically connected to an external electrical power source via the control connector 101 and the power connector 102, as well as to the two electrical heating elements 154, 155 received in the heat transfer liquid circulation chamber 150 via their respective terminal segments.

Thus, at least one electrical connection element 106 extends from the power connector 102, into the second compartment 117 provided in the internal volume 114 of the housing 110. Although not visible from the cross-section shown in Fig. 2, it is understood that at least one other electrical connection element extends from the control connector 101, into this second compartment 117, these electrical connection elements being adapted to allow electrical connection between the connector from which they respectively extend and the printed circuit board 140. Advantageously, this electrical connection is thus made in the second compartment 117.

According to the illustrated example, at least one electronic switch 141 is also received in the second compartment 117. This at least one electronic switch 141 is electrically connected to the printed circuit board 140, and more particularly to at least one control track and one power track formed on the printed circuit board 140. As shown, this at least one electronic switch 141 is more particularly arranged in contact with the inner wall 115 that helps define the second compartment 117. For example, the outer wall 159 of the circulation chamber 150, and in particular the inner wall 115 that participates in forming this outer wall 159 of the circulation chamber 150, may comprise a thermally conductive material. Advantageously, a heat transfer can thus take place between the heat transfer liquid circulating in the circulation chamber 150 and the at least one electronic switch 141 arranged in contact with the inner wall 115.

Advantageously, a plate 160 equipped with at least one elastic blade 161 allows the electronic switch 141 to be pressed against the internal wall 115. By "elastic blade" is meant here a blade adapted to return to its initial position after having undergone mechanical deformation.

As shown, this plate 160 is thus positioned so that the at least one elastic blade 161 that it carries is in contact with the at least one electronic switch 141. Advantageously, the plate 161 comprises at least as many elastic blades 161 as the heating device 100 comprises electronic switches.

As shown, at least one fastening means 162 allows the plate 160 to be made integral with the inner wall 115. For example, the at least one fastening means 162 may be a screw. Advantageously, a plurality of fastening means 162 are used to secure the plate 160 to the inner wall 115. It is understood from Fig. 2 that the at least one electronic switch 141 is interposed between the inner wall 115 and the at least one elastic blade 161. This at least one elastic blade 161 is thus deformed by the presence of this at least one electronic switch 141 and tends to return to its initial position. In so doing, the at least one elastic blade 161 generates a bearing force that presses the at least one electronic switch 141 against the internal wall 115, thus ensuring permanent contact between this at least one electronic switch 161 and the internal wall 115. This contact advantageously allows a heat exchange to take place between the heat transfer liquid circulating in the circulation chamber 150 and the at least one electronic switch 141. Thus, the at least one electronic switch 141 transmits calories to the heat transfer liquid and participates in the heating of this heat transfer liquid, while maintaining an acceptable temperature allowing its proper operation.

The circulation chamber 150 of the heat transfer liquid is sealed from the rest of the internal volume of the housing 110. In other words, this circulation chamber 150 is sealed, at least, with respect to the second compartment 117, which ensures the safety of the electrical connection which is made there.

The printed circuit board 140 is further electrically connected to the electrical heating elements 154, 155 received in the heat transfer fluid circulation chamber 150. To this end, the first terminal segment 154a and the second terminal segment of the first electrical heating element 154 pass through the first closure plate 211 which closes the first opening 210 formed in the partition wall 118, and the first terminal segment 155a and the second terminal segment of the second electrical heating element 155, in turn, pass through the second closure plate 213 which closes the second opening 212 formed in this partition wall 118. In other words, a free end of the first terminal segment 154a of the first electrical heating element 154, a free end of the second terminal segment of the first electrical heating element 154, a free end of the first terminal segment 155a of the second electrical heating element 155, and a free end of the second terminal segment of the second electrical heating element 155 all four extend into the third compartment 119, thereby allowing electrical connection of these terminal segments to the circuit board 140.

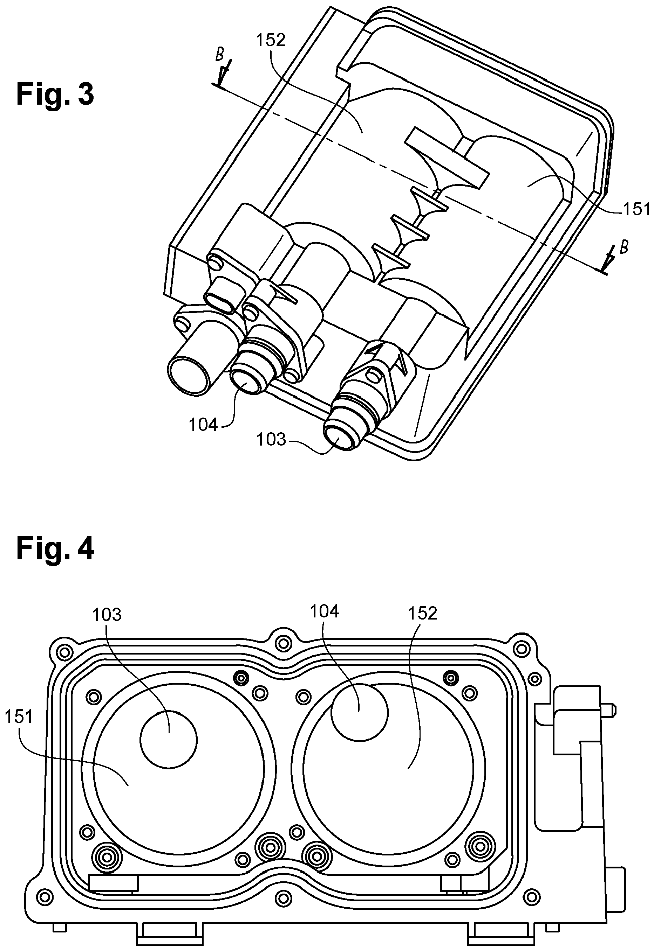

Fig. 3 is another perspective view of the electric heating device according to one embodiment.

The device 100 for electrically heating a heat transfer fluid comprises a housing 110 delimiting an internal volume 114. The internal volume 114 comprises at least one chamber 150 delimited by an outer wall 159 for circulation of a heat transfer fluid. The circulation chamber 150 has at least a first internal space 151 and at least a second internal space 152. These are separated from each other, at least partly, by a partition 153 with a passage 156 formed so as to allow circulation of the heat transfer fluid there between.

The heating device 100 further comprises an inlet hydraulic connection member 103 connected to the first internal space 151 and an outlet hydraulic connection member 104 connected to the second internal space 152.

At least one first electrical heating element 154 is received in the first internal space 151 of the chamber 150 and at least one second electrical heating element 155 is received in the second internal space 152.

The heating device 100 is configured for mounting and operation in a horizontal position in which the first internal space 151 and the second internal space 152 are arranged substantially on the same level with respect to the ground. In other words, the heating device comprises 100 mounting elements (fastening lugs, mounting tabs) which are designed specifically for mounting the heating device 100 so that during operation the fluid travels through the internal spaces 151, 152 arranged parallel at the same level with respect to the ground, e.g. to ground surface when the heating device 100 is mounted in a vehicle, assuming the ground surface is not inclined in any substantial way. The heating device 100 is adapted to function within a heat transfer circuit properly and effectively in this position, especially taking into account secure connection resistant to vibration and forces generated during movement of the designed mounting place, e.g. the vehicle. In one example, the first internal space 151 and the second internal space 152 are arranged substantially on the same level with respect to the ground when their respective top and bottom portions are on the same level with respect to the ground.

The first internal space 151 and the second internal space 152 have substantially the same size and shape, the shape being of a tube with a progressively decreasing diameter.

The outlet hydraulic connection member 104 merges into the outer wall 159 and the second internal space 152 substantially parallel to the main extension axis X of the second electrical heating element 155. In other words, the main axis of extension of the outlet hydraulic connection member 104 runs substantially in parallel to the main extension axis X of the second electrical heating element 155. As can be seen, this means that at one point the outlet hydraulic connection member 104 protrudes out of the outer wall 159, and at a second point it gradually disappears into the outer wall 159.

The inlet hydraulic connection member 103 merges into the outer wall 159 and the first internal space 151 substantially parallel to the main extension axis X of the first electrical heating element 154. In other words, the main axis of extension of the inlet hydraulic connection member 103 runs substantially in parallel to the main extension axis X of the first electrical heating element 154.

A heating, ventilation and/or air-conditioning system may comprise at least one heating device 100 as mentioned above.

Fig. 4 is a cross-sectional view of the electric heating device according to the invention as indicated in Fig. 3. This Fig. 4 thus illustrates the heating device 100 seen according to a cross-section made along a plane BB illustrated in Fig. 3.

The outlet hydraulic connection member 104 is arranged at the substantially top portion of the second internal space 152 when the heating device 100 is in the horizontal position. By the substantially top portion here it is understood a portion of the second internal space 152 defined opposite with respect to the ground, e.g. to the surface on which a vehicle equipped with the heating device 100 drives. In one example, when viewed in a section perpendicular to the main extension axis X of the second electrical heating element 155 (as shown in Fig. 4), the outlet hydraulic connection member 104 is located so that it enters the upper half of the second internal space 152. In further example, when viewed in a section perpendicular to the main extension axis X of the second electrical heating element 155 (as shown in Fig. 4), the outlet hydraulic connection member 104 is located so that it enters the upper portion of the upper half of the second internal space 152 so that its cross-section in this view overlaps mostly the cross-section of this upper half of the second internal space 152. Preferably, the outlet hydraulic connection member 104 is located in the top-most location of the second internal space 152. However, due to specific space requirements, especially in a limited space within a vehicle, the outlet hydraulic connection member 104 can be located slightly shifted to either side of the top-most position.

Such configuration of the outlet hydraulic connection member 104 enables the second electrical heating element 155 to be fully submerged within the heat transfer fluid and eliminate the risk of any gas being trapped in the top portion of the second internal space 152. As there is no gas, the second electrical heating element 155 is prevented from burning when the heating device 100 is in the horizontal position.

The inlet hydraulic connection member 103 is located lower than the outlet hydraulic connection member 104 when the heating device 100 is in the horizontal position. In particular, this relates to the ground in as a point of reference.

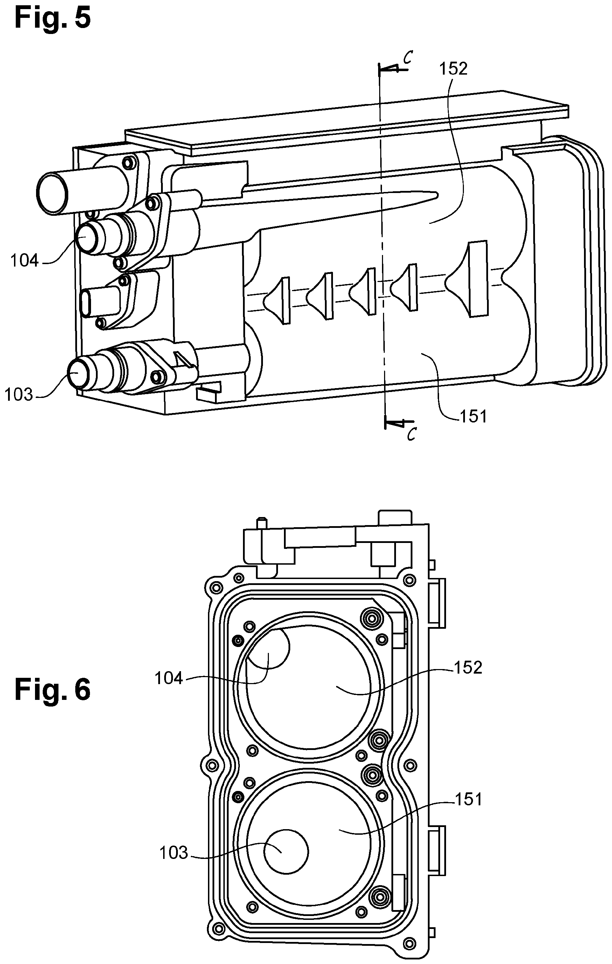

Fig. 5 is another perspective view of the electric heating device according to another embodiment.

In this example, the heating device 100 is configured for mounting and operation in a vertical position in which the second internal space 152 is arranged substantially above the first internal space 151 with respect to the ground, in addition to being configured for mounting and operation in a horizontal position as explained earlier.

In other words, the heating device 100 comprises mounting elements (fastening lugs, mounting tabs) which are designed specifically for mounting the heating device 100 so that during operation the fluid travels through the internal spaces 151, 152, the second internal space 152 being arranged substantially above the first internal space 151 with respect to the ground, e.g. to ground surface when the heating device 100 is mounted in a vehicle, assuming the ground surface is not inclined in any substantial way. The heating device 100 is adapted to function within a heat transfer circuit properly and effectively in this position, especially taking into account secure connection resistant to vibration and forces generated during movement of the designed mounting place, e.g. the vehicle. In one example, the second internal space 152 is arranged substantially above the first internal space 151 with respect to the ground when the bottom portion of the second internal space 152 is located above the top portion of the first internal space 151 with respect to the ground.

The outlet hydraulic connection member 104 is arranged at the substantially top portion of the second internal space 152 when the heating device 100 is in the vertical position.

By the substantially top portion here it is understood a portion of the second internal space 152 defined opposite with respect to the ground, e.g. to the surface on which a vehicle equipped with the heating device 100 drives.

Fig. 6 is a cross-sectional view of the electric heating device according to the invention as indicated in Fig. 5. This Fig. 6 thus illustrates the heating device 100 seen according to a cross-section made along a plane CC illustrated in Fig. 5.

In one example, when viewed in a section perpendicular to the main extension axis X of the second electrical heating element 155 (as shown in Fig. 6), the outlet hydraulic connection member 104 is located so that it enters the upper half of the second internal space 152. In further example, when viewed in a section perpendicular to the main extension axis X of the second electrical heating element 155, the outlet hydraulic connection member 104 is located so that it enters the upper portion of the upper half of the second internal space 152 so that its cross-section in this view overlaps mostly the cross-section of this upper half of the second internal space 152.

Preferably, the outlet hydraulic connection member 104 is located within a top quarter of the second internal space 152, the top quarter being the one on the opposite portion of the second internal space 152 in relation to the first internal space 151 when the heating device 100 is in the horizontal position. More specifically, the top quarter of the second internal space 152 is located in the top half of the second internal space 152 when considered in horizontal position of the heating device 100 and in the top half of the second internal space 152 when considered in vertical position of the heating device 100. Effectively, the outlet hydraulic connection member 104 is located in the substantially top portion of the second internal space 152 when the heating device 100 is mounted and operates either in horizontal or vertical position.

Such configuration of the outlet hydraulic connection member 104 enables the second electrical heating element 155 to be fully submerged within the heat transfer fluid and eliminate the risk of any gas being trapped in the top portion of the second internal space 152 in either horizontal or vertical position of the heating device 100. As there is no gas, the second electrical heating element 155 is prevented from burning when the heating device 100 in these positions.

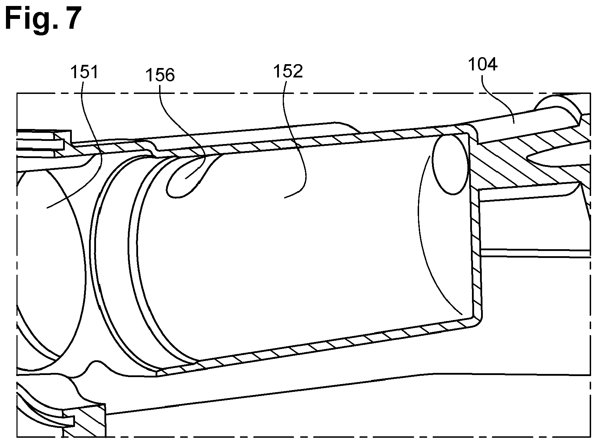

Fig. 7 presents the inside portion of the circulation chamber. The passage 156 is preferably arranged at the substantially top portion of the first internal space 151 and the second internal space 152 when the heating device 100 is in the horizontal position. Preferably, the passage 156 is located at and connected to the top-most portions of the internal spaces 151, 152 in the horizontal position of the heating device 100.

For this reason, gas is prevented from being trapped in the first internal space 151 and, if present for any reason, it can move to the second internal space 152 from where it can exit through the outlet hydraulic connection member 104 from the heating device 100. Consequently, both electrical heating elements 154, 155 are protected for burning to a fullest degree.

The present invention, however, is not limited to the means and configurations described and illustrated herein, and also extends to any equivalent means and configuration and any technically operative combination of such means. In particular, the shape and arrangement of the circuit board could be modified without prejudice to the invention as long as it fulfills the functionality described herein.

## Claims

1. A heating device (100) for electrically heating a heat transfer fluid, comprising a housing (110) delimiting an internal volume (114) which comprises at least one chamber (150) delimited by an outer wall (159) for circulation of a heat transfer fluid, the circulation chamber (150) having at least a first internal space (151) and at least a second internal space (152) separated from each other, at least partly, by a partition (153) with a passage (156) formed so as to allow circulation of the heat transfer fluid there between, an inlet hydraulic connection member (103) connected to the first internal space (151) and an outlet hydraulic connection member (104) connected to the second internal space (152), at least one first electrical heating element (154) received in the first internal space (151) of the chamber (150) and at least one second electrical heating element (155) received in the second internal space (152), the heating device (100) being configured for mounting and operation in a horizontal position in which the first internal space (151) and the second internal space (152) are arranged substantially on the same level with respect to the ground, **characterised in that** the outlet hydraulic connection member (104) is arranged at the substantially top portion of the second internal space (152) when the heating device (100) is in the horizontal position.

2. A heating device (100) according to claim 1, wherein the passage (156) is arranged at the substantially top portion of the first internal space (151) and the second internal space (152) when the heating device (100) is in the horizontal position.

3. A heating device (100) according to claim 1, wherein the heating device (100) is configured for mounting and operation in a vertical position in which the second internal space (152) is arranged substantially above the first internal space (151) with respect to the ground, wherein the outlet hydraulic connection member (104) is arranged at the substantially top portion of the second internal space (152) when the heating device (100) is in the vertical position.

4. A heating device (100) according to any preceding claim, wherein the first internal space (151) and the second internal space (152) have substantially the same size and shape, the shape being of a tube with a progressively decreasing diameter.

5. A heating device (100) according to any preceding claim, wherein the first and the second electrical heating elements (154, 155) extend along their main extension axes X and comprise intermediate portions (154b, 155b) with windings wound around said main extension axes X.

6. A heating device (100) according to claim 4 and 5, wherein the first internal space (151) and the second internal space (152) decrease their diameter along the main extension axes X of the first electrical heating element (154) and the second electrical heating element (154) respectively.

7. A heating device (100) according to claim 6, wherein the outlet hydraulic connection member (104) merges into the outer wall (159) and the second internal space (152) substantially parallel to the main extension axis X of the second electrical heating element (154).

8. A heating device (100) according to claim 6 or 7, wherein the inlet hydraulic connection member (103) merges into the outer wall (159) and the first internal space (152) substantially parallel to the main extension axis X of the first electrical heating element (154).

9. A heating device (100) according to any preceding claim, wherein the inlet hydraulic connection member (103) is located lower than the outlet hydraulic connection member (104) when the heating device (100) is in the horizontal position.

10. A heating device (100) according to any preceding claim, wherein the outlet hydraulic connection member (104) is located within a top quarter of the second internal space (152), the top quarter being the one on the opposite portion of the second internal space (152) in relation to the first internal space (151) when the heating device (100) is in the horizontal position.

11. A heating device (100) according to claim 5, wherein the windings are arranged along the outer wall (159) at a distance which is decreasing along the main extension axes X.

12. A heating device (100) according to claim 5, wherein the windings are arranged along the outer wall (159) at a constant distance.

13. A heating device (100) according to any preceding claim, wherein the inlet hydraulic connection member (103) and the outlet hydraulic connection member (104) extend in parallel.

14. A heating, ventilation and/or air-conditioning system, comprising at least one heating device (100) according to any of the preceding claims.
